(19) Europäisches Patentamt / European Patent Office / Office européen des brevets

(11) **EP 3 640 398 B1**

(12) **EUROPEAN PATENT SPECIFICATION**

(45) Date of publication and mention
of the grant of the patent:
**06.05.2026 Bulletin 2026/19**

(21) Application number: **18818149.9**

(22) Date of filing: **05.06.2018**

(51) International Patent Classification (IPC):
*D21H 13/20* (2006.01)       *D21H 13/26* (2006.01)
*D21H 27/12* (2006.01)       *H01B 3/52* (2006.01)
*D04H 1/4326* (2012.01)     *D04H 1/4342* (2012.01)
*D04H 1/54* (2012.01)        *D21H 27/00* (2006.01)
*B32B 5/02* (2006.01)

(52) Cooperative Patent Classification (CPC):
**D21H 27/00; B32B 5/022; B32B 5/08; B32B 27/12;
B32B 27/286; B32B 27/36; B32B 29/02;
D04H 1/4326; D04H 1/4342; D04H 1/54;
D21H 13/20; D21H 13/26; H01B 3/52;
H01M 50/414; H01M 50/423;** (Cont.)

(86) International application number:
**PCT/JP2018/021510**

(87) International publication number:
**WO 2018/230391 (20.12.2018 Gazette 2018/51)**

(54) **WET NONWOVEN FABRIC CONTAINING META-ARAMID AND POLYPHENYLENE SULFIDE,
AND MULTILAYER SHEET OF SAME**

METAARAMID UND POLYPHENYLENSULFID ENTHALTENDER NASSVLIESSTOFF UND
MEHRLAGIGE SCHICHT DARAUS

TISSU NON-TISSÉ PAR VOIE HUMIDE CONTENANT UN MÉTAARAMIDE ET UN SULFURE DE
POLYPHÉNYLÈNE, ET FEUILLE STRATIFIÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2017 JP 2017117395**

(43) Date of publication of application:
**22.04.2020 Bulletin 2020/17**

(73) Proprietor: **Toray Industries, Inc.
Tokyo 103-8666 (JP)**

(72) Inventors:
• **HARADA, Masaru
Otsu-shi
Shiga 520-2141 (JP)**

• **TSUCHIKURA, Hiroshi
Otsu-shi
Shiga 520-2141 (JP)**

(74) Representative: **Hoefer & Partner Patentanwälte
mbB
Pilgersheimer Straße 20
81543 München (DE)**

(56) References cited:
EP-A2- 0 285 338        WO-A1-2017/006807
CN-A- 106 087 529     CN-C- 100 485 123
JP-A- 2016 125 185     JP-A- H0 247 389
JP-A- H02 257 522       JP-A- H05 323 819
JP-A- H09 139 113       US-A1- 2015 111 013

(52) Cooperative Patent Classification (CPC): (Cont.)
**H01M 50/44; H01M 50/454; H01M 50/489;**
B32B 2262/0269; B32B 2262/14; B32B 2307/206;
H01M 50/443; Y02E 60/10

**Description**

TECHNICAL FIELD

The present invention relates to a wet nonwoven fabric containing meta-aramid and polyphenylene sulfide and a laminate (laminated sheet) of the same, which are suitable as electrical insulating paper or an electrical insulating sheet.

BACKGROUND ART

Paper and laminates thereof are demanded in a wide range of fields and used in various things such as filters, separators, and electrical insulating members. The heat resistance and denseness required for paper and laminates there of vary depending on the respective applications.

In recent years, the development of electric vehicles has progressed as the interest in environmental problems has increased, and particularly amelioration in efficiency and advancement of industrial motors including in-vehicle motors are desired. Under such circumstances, the performance of insulating paper or insulating sheets which are formed of paper or laminates thereof and used in industrial motors is also required to be enhanced. The heat resistance and durability required for insulating members differ depending on the use environment, but the use environment temperature of industrial motors such as in-vehicle motors exceeds 100°C in some cases, and thus the insulating members are also required to exhibit such heat resistance.

Examples of the material for insulating paper used in a high temperature environment include electrical insulating paper obtained by mixing an aramid fiber as a heat resistant fiber and a polyphenylene sulfide fiber, and this electrical insulating paper is disclosed in Patent Document 1 and Patent Document 2.

Moreover, in order to improve insulating properties, it is effective to improve the denseness of a wet nonwoven fabric, and a method in which a pulp-shaped fiber aggregate is mixed is conceivable. Furthermore, a method is also known in which a wet nonwoven fabric is subjected to a heating and pressurization treatment to densify the structure so as to improve the insulating properties. Moreover, for example, Patent Documents 3 and 4 disclose wet nonwoven fabrics containing fibrillated pulp-shaped aramid fibers and undrawn polyphenylene sulfide fibers. Patent Document 5 relates to a blend formed paper, containing specific amounts of polyphenylene sulfide fibers and aromatic polyamide fibers, excellent in flame retardance, heat resistance, strength and electrical characteristics and suitably useful for ultrahigh-voltage insulation. The blend formed paper containing polyphenylene sulfide fibers and aromatic polyamide fibers in amounts accounting for ≥80wt.%. Both fibers respectively account for ≥30wt.%.

Patent Document 6 discloses a high-strength aramid paper and a method for preparing the same through dissolving and re-pressing self-reinforcing. The method comprises the following steps: subjecting polyphenylene sulfide fiber to pretreatment, then mixing the pretreated polyphenylene sulfide fiber, aramid fiber and aramid pulp, subjecting dried raw paper to dipping and then pressing treated sample paper; soaking the treated sample paper in a washing solution and removing an organic solvent and inorganic salt left in the paper; and pressing the treated sample paper. When the high-strength aramid paper has gram weight of 10 to 200 g/m$^2$, the aramid paper has a thickness of 20 to 400 $\mu$m, tensile strength of 10 to 150 KN/m and dielectric strength of 30 to 70 kV/mm. The aramid paper and polyphenylene sulfide are used as raw materials. The method is environment friendly and low in cost. The prepared paper has high strength and good evenness, and industrial production can be realized through partial reconstruction of conventional paper machines.

PRIOR ART DOCUMENT

PATENT DOCUMENTS

Patent Document 1: Japanese Patent Laid-open Publication No. 7-189169
Patent Document 2: Japanese Patent Laid-open Publication No. 2-47389
Patent Document 3: Japanese Patent Laid-open Publication No. 2001-40597
Patent Document 4: Japanese Patent Laid-open Publication No. 2009-277653
Patent Document 5: JP H02 47389 A
Patent Document 6: CN 106 087 529 A

SUMMARY OF THE INVENTION

PROBLEMS TO BE SOLVED BY THE INVENTION

However, an insulating member such as insulating paper is required to exhibit not only excellent insulating properties but also mechanical properties, processability, and workability when being disposed and inserted inside an electrical member for a motor and the like.

Patent Document 1 and Patent Document 2 disclose electrical insulating paper obtained by mixing an aramid fiber and a polyphenylene sulfide fiber, but there are through-holes which allow the air to pass through in these mixed paper, an electric current passes through the through-hole portions, and thus the dielectric breakdown strength cannot be improved. In addition, the insulating paper is required to be pasted to a film since the tension and stiffness thereof are also weak.

In addition, Patent Document 3 discloses a wet nonwoven fabric which contains a fibrillated pulp-shaped aramid fiber and an undrawn polyphenylene sulfide fiber and has been subjected to thermal calendering, but this nonwoven fabric is formed by fibrillating aramid fibers so that the gaps between the fibers are diminished and has an excellent electrolytic solution absorbing speed when being used as a battery separator. For this reason, it is considered that there are a great number of voids in the wet nonwoven fabric in fact and partial discharge is likely to be caused at the void portions, and it is thus considered that not only sufficient dielectric breakdown strength is attained but also the insulating properties are diminished as the wet nonwoven fabric is used for a long period of time.

Furthermore, Patent Document 4 discloses electrical insulating paper obtained by subjecting a wet nonwoven fabric containing a fibrillated aramid fiber and a polyphenylene sulfide short fiber to thermal calendering, but in the insulating paper specifically disclosed in the present document, a para-aramid fiber is used as the aramid fiber, the content of undrawn polyphenylene sulfide short fibers is high, thus the undrawn polyphenylene sulfide short fibers are excessively melted and formed into a film by calendering to be like a film. As a result, the wear durability is not sufficient as well as the tear strength decreases, and there is room for improvement from the viewpoint of paper breakage due to burrs at the end portion of the motor slot. In addition, the cost of the insulating paper itself increases.

The present invention has been made in view of such problems of conventional insulating members such as electrical insulating paper, and an object thereof is to provide a wet nonwoven fabric, a laminate of the wet nonwoven fabric, electrical insulating paper, and an electrical insulating sheet including the electrical insulating paper, which exhibit excellent dielectric breakdown strength, excellent hygroscopic dimensional stability and thermal dimensional stability, and excellent tear strength and wear durability.

SOLUTIONS TO THE PROBLEMS

As a result of intensive investigations to solve the problems, the present invention is defined as shown in the appended claims.

EFFECTS OF THE INVENTION

According to the present invention, it is possible to obtain a nonwoven fabric exhibiting excellent dielectric breakdown strength, hygroscopic dimensional stability, thermal dimensional stability, tear strength, and wear durability, as well as a laminated sheet including the wet nonwoven fabric, an electrical insulating paper, and an electrical insulating sheet, by having the configuration described above.

EMBODIMENTS OF THE INVENTION

The present invention is a wet nonwoven fabric which contains a meta-aramid fiber and a polyphenylene sulfide short fiber, in which a proportion of the polyphenylene sulfide short fiber at least partially fused in the wet nonwoven fabric is 40% or less, and the wet nonwoven fabric has a dielectric breakdown strength of 17 kV/mm or more.

A meta-aramid fiber exhibits excellent heat resistance and excellent thermal dimensional stability and flame retardance and thus can suppress a decrease in mechanical properties even in a high temperature environment. Furthermore, as meta-aramid fibers are heated and pressurized together with polyphenylene sulfide short fibers, the polyphenylene sulfide short fibers can be melted and formed into a film between the meta-aramid fibers and large gaps in the wet nonwoven fabric can be eliminated. As a result, the electrical breakdown strength can be improved.

The proportion of the meta-aramid fiber in the nonwoven fabric is 15% or more and preferably 30% or more, from the viewpoint of heat resistance and thermal dimensional stability. The upper limit is preferably 80% or less from the viewpoint of dielectric breakdown strength and hydrolysis resistance. For this reason, the meta-aramid fiber is used at 15% by mass or more and preferably 30% by mass or more in a case in which the total mass of the fibers used when constituting the nonwoven fabric is taken as 100% by mass (hereinafter referred to as the nonwoven fabric constituting fibers). The upper limit is preferably 80% by mass or less.

In the present invention, meta-aramid means an aromatic polyamide having an amide group substituted at the meta position of the benzene ring. In terms of chemical structure, meta-aramid means a linear polymer compound in which 60% by mole or more, preferably 70% by mole or more, more preferably 80% by mole or more, and still more preferably 90% by mole or more of the amide bonds is directly bonded to the aromatic ring.

Examples of meta-aramid include polymetaphenylene isophthalamide and any copolymer thereof. These aramids can be industrially produced, for example, by a normal interfacial polymerization method, solution polymerization method, or the like, and can be procured as a commercially available product, but is not limited to these. Among meta-aramids, polymetaphenylene isophthalamide is preferably used from the viewpoint of having favorable properties such as molding processability, thermal adhesive property, flame retardance, and heat resistance.

Examples of the method for fiberizing meta-aramid include a method in which a meta-aramid polymer which is industrially produced by a normal method is dissolved in a solvent such as dimethylacetamide and extruded through a nozzle and the solvent is removed. The solvent removal method is classified into a dry method in which the solvent is removed in a high-temperature atmosphere, a wet method in which the solvent is removed in a poor solvent of meta-aramid such as water, or a combination of these two. The meta-aramid fiber obtained by these methods has one uniform cross-sectional shape with respect to the length direction of the fiber, and the fiber is not split or branched into two or more in the length direction of the fiber. In the present invention, such meta-aramid fibers are referred to as normal meta-aramid fibers.

Normal meta-aramid fibers obtained by a dry method have a gourd shape having a flat cross-sectional shape and a shape called a so-called dog bone shape. On the other hand, normal meta-aramid fibers obtained by a wet method have a shape close to a circle. The fiber cross-sectional shape is likely to affect the packing property of the meta-aramid fibers after papermaking, and the dielectric breakdown strength changes accordingly. In addition, meta-aramid fibers obtained by a dry method are preferably used since the surface smoothness of the wet nonwoven fabric to be obtained increases and the wear durability of the wet nonwoven fabrics can be still further ameliorated in the case of using dog-bone shaped meta-aramid.

Furthermore, the meta-aramid fiber contains a fibrillated meta-aramid fiber. Here, fibrillation means that the fibers are split into two or more in the vertical direction and each of which is thinner than a single fiber or has a thinned portion. By performing fibrillation, the entanglement of the fibers is improved and the paper strength is improved, thus a wet nonwoven fabric exhibiting excellent process passability at the time of papermaking can be obtained. In addition, the fibrils can still further decrease the large gaps between the fibers, and as a result, an extremely dense wet nonwoven fabric can be obtained, thus the dielectric breakdown strength is still further excellent.

The fibrillated meta-aramid fiber is not limited, but examples include the one with a method in which a normal meta-aramid fiber is beaten, for example, by mechanical action and the one with a method in which a meta-aramid polymer is dissolved in a solvent such as dimethylacetamide and extruded into a poor solvent such as water while performing stirring and reprecipitation is performed. The fibrillated meta-aramid fiber can be further beaten to be more highly fibrillated.

Incidentally, the fibrillated meta-aramid fiber and the normal meta-aramid fiber may be used in mixture. The proportion of the fibrillated meta-aramid fiber is 15% or more, preferably 15% to 50%, more preferably 20% to 50%, and most preferably 30% to 50% in the nonwoven fabric. For this reason, the fibrillated meta-aramid fiber is used at 15% by mass or more (preferably 15% to 50% by mass, more preferably 20% to 50% by mass, and most preferably 30% to 50% by mass) in the nonwoven fabric constituting fibers as well. As the fibrillated meta-aramid fiber is contained, the entanglement of the fibers is improved and the paper strength is improved. As a result, a wet nonwoven fabric exhibiting excellent process passability at the time of papermaking can be obtained. In addition, a dense wet nonwoven fabric in which large gaps between fibers are decreased by fibrils can be obtained. Moreover, as the content of fibrillated meta-aramid fiber is 50% or less, it is easy to perform dewatering, and so it is possible to prevent an increase in the load of dewatering suction and press roll at the time of papermaking and to obtain a wet nonwoven fabric which exhibits excellent paper strength but does not have an excessive moisture content after the dewatering step.

Here, the proportion of the fibrillated meta-aramid fiber is calculated as a percentage by mass from the ratio of the fibrillated meta-aramid fiber attained by collecting a 5 cm square sample, dividing the sample into the respective fibers, then drying the respective fibers in an oven at 100°C, and then measuring the weight of the respective fibers in the case of a nonwoven fabric before being subjected to a heating and pressurization treatment (the same applies to the proportion in the nonwoven fabric constituting fibers as well). It is difficult to divide a sample into the respective fibers in the case of the sample after being subjected to a heating and pressurization treatment, and thus in the photograph of the cross section of a sample, the proportion is calculated as percentage from the proportion of the total area of the parts at which the fibers are split into two or more to be thinner than a single fiber or the thinned part with respect to the total area of the nonwoven fabric excluding the void part.

Incidentally, the meta-aramid fiber in the present invention is a general term for a normal meta-aramid fiber and a fibrillated meta-aramid fiber. Hereinafter, normal meta-aramid fibers and fibrillated meta-aramid fibers are collectively referred to as meta-aramid fibers in some cases.

The wet nonwoven fabric in the present invention contains a polyphenylene sulfide short fiber. As a polyphenylene sulfide short fiber is contained, a wet nonwoven fabric exhibiting excellent hygroscopic dimensional stability can be obtained. In addition, in the case of using polyphenylene sulfide short fibers, the polyphenylene sulfide short fibers are melted and formed into a film in the gaps and surfaces of meta-aramid fibers by performing a heating and pressurization treatment, and thus the hydrolysis resistance can be improved.

Polyphenylene sulfide is a polymer having phenylene sulfide units such as a p-phenylene sulfide unit and a m-phenylene sulfide unit as repeating units. The polyphenylene sulfide may be a homopolymer of either of these units or a copolymer having the two units. Moreover, the polyphenylene sulfide may be a copolymer with another aromatic sulfide.

In addition, the weight average molecular weight of polyphenylene sulfide is preferably 40,000 to 60,000. By setting the weight average molecular weight to 40,000 or more, favorable mechanical properties as a polyphenylene sulfide fiber can be attained. Moreover, by setting the weight average molecular weight to 60,000 or less, the viscosity of the melt spinning solution is suppressed and a special high pressure resistant spinning facility is not required.

The polyphenylene sulfide short fiber may be an undrawn polyphenylene sulfide short fiber or a drawn polyphenylene sulfide short fiber, but preferably includes an undrawn polyphenylene sulfide short fiber which is deformed and fused at a lower temperature. Since the polyphenylene sulfide short fiber are thermoplastic, it is deformed when being heated and pressurized and is fused to meta-aramid fibers or other polyphenylene sulfide short fibers (undrawn polyphenylene sulfide short fibers and drawn polyphenylene sulfide short fibers) constituting the wet nonwoven fabric as well as crushing the gaps between the nonwoven fabrics; as a result, a dense wet nonwoven fabric can be obtained. As at least a part of the polyphenylene sulfide short fibers is fused, the dielectric breakdown strength can be improved and a dielectric breakdown strength of 17 kV/mm or more is achieved. Incidentally, the case in which at least a part of fiber is fused may be a case in which there is a site at which the fiber form is left by fusion or a case in which the entire fiber is deformed by fusion. In addition, the polyphenylene sulfide short fibers contained in the nonwoven fabric of the present invention include those in an aspect in which at least a part of the polyphenylene sulfide short fibers is fused and, as a result, the fiber form is not left.

The proportion of polyphenylene sulfide short fibers at least partially fused in the wet nonwoven fabric is 40% or less, preferably 20% to 40%, more preferably 25% to 40%, and more preferably 30% to 40%. By setting the proportion of the polyphenylene sulfide short fibers at least partially fused in the nonwoven fabric to the above range, it is possible to obtain a dense wet nonwoven fabric exhibiting excellent tear strength and to improve the dielectric breakdown strength. In a case in which the proportion of the polyphenylene sulfide short fibers at least partially fused is in a preferred aspect (20% to 40%), the voids in the wet nonwoven fabric are sufficiently crushed and excellent dielectric breakdown strength can be exerted. On the other hand, in a case in which the proportion of the polyphenylene sulfide short fibers at least partially fused is excessive, the wet nonwoven fabric tends to be like a film and the tear strength decreases although there is no problem with the dielectric breakdown strength. The proportion of the polyphenylene sulfide short fibers at least partially fused is calculated from the proportion of the total area of the portion at which two or more polyphenylene sulfide short fibers are fused and the portion at which the polyphenylene sulfide is formed into a film with respect to the total area of the nonwoven fabric excluding the void part in the photograph of the cross section of a sample after being subjected to the heating and pressurization treatment.

Incidentally, the "undrawn polyphenylene sulfide short fiber" as used herein refers to a polyphenylene sulfide short fiber obtained by performing melt spinning through a nozzle using an extruder-type spinning machine and the like and then mostly without performing drawing.

In the present invention, as the polyphenylene sulfide short fiber, the undrawn polyphenylene sulfide short fiber and a drawn polyphenylene sulfide short fiber can be concurrently used or only a drawn polyphenylene sulfide short fiber can be used. Hereinafter, undrawn polyphenylene sulfide short fibers and drawn polyphenylene sulfide short fibers are collectively referred to as polyphenylene sulfide short fibers in some cases.

In a case in which the undrawn polyphenylene sulfide short fiber and the drawn polyphenylene sulfide short fiber are concurrently used as the polyphenylene sulfide short fiber, the proportion of the drawn polyphenylene sulfide short fibers is preferably 10% to 40% by mass and more preferably 15% to 30% by mass in the nonwoven fabric constituting fibers. On the other hand, the undrawn polyphenylene sulfide is preferably 10% to 40% by mass and more preferably 15% to 30% by mass in the nonwoven fabric constituting fibers. In a case in which the undrawn polyphenylene sulfide short fiber and a drawn polyphenylene sulfide short fiber are concurrently used in the above ranges, the polyphenylene sulfide short fibers such as the undrawn polyphenylene sulfide short fibers are melted and fused to other fibers in a range of 40% or less by the heating and pressurization treatment, and thus the adhesive property is improved and a wet nonwoven fabric exhibiting excellent tensile strength and tear strength is obtained.

On the other hand, in a case in which the drawn polyphenylene sulfide short fibers are heated and pressurized and a part thereof is fused without using the undrawn polyphenylene sulfide short fibers, the drawn polyphenylene sulfide short fibers are 40% by mass or less, preferably 20% to 40% by mass, more preferably 25% to 40% by mass, and more preferably 30% to 40% by mass in the nonwoven fabric constituting fibers. In a case in which the proportion is excessive, the wet nonwoven fabric tends to be like a film and the tear strength decreases although there is no problem with the dielectric breakdown strength.

The single fiber fineness of the polyphenylene sulfide short fibers in the wet nonwoven fabric in the present invention is preferably 0.05 dtex or more and 5 dtex or less for both the undrawn polyphenylene sulfide short fibers and the drawn polyphenylene sulfide fibers. As the single fiber fineness is 0.05 dtex or more, the fibers are not too easily entangled but are likely to be uniformly dispersed. As the single fiber fineness is 5 dtex or less, the fibers are not too thick or too hard, and the entanglement force between the fibers can be maintained in an excellent range. As a result, sufficient paper strength is attained and a wet nonwoven fabric to be hardly torn can be obtained.

In addition, the fiber length of the polyphenylene sulfide short fibers is preferably 0.5 to 15 mm and more preferably 1 to 8 mm for both the undrawn polyphenylene sulfide short fibers and the drawn polyphenylene sulfide short fibers. By setting the fiber length to 0.5 mm or more, the strength of the wet nonwoven fabric can be increased by entanglement of the fibers. In addition, by setting the fiber length to 15 mm or less, it is possible to prevent unevenness and the like caused as the entanglement of the fibers lumps.

As the meta-aramid fibers and polyphenylene sulfide short fibers are mixed together, a dry web is obtained using a commonly used paper machine, the polyphenylene sulfide short fibers, preferably the undrawn polyphenylene sulfide short fibers are fused in a certain range, and the voids are crushed, electrical insulating paper with 17 kV/mm or more is obtained. As the dielectric breakdown strength is 17 kV/mm or more, the electrical insulating paper can be used as electrical insulating paper to be used in motors, potential transformers and the like.

Incidentally, the dielectric breakdown strength in the present invention is calculated by dividing voltage by the thickness of central portion of a test piece in conformity with JIS C2151 (2006) 17.1, where the voltage is the value causing dielectric breakdown of the test piece which is sandwiched between a disk-shaped upper electrode having a diameter of 25 mm and a mass of 250 g and a disk-shaped lower electrode having a diameter of 75 mm and to which an alternating-current voltage having a frequency of 60 Hz is applied while increasing the voltage at 1.0 kV/sec using air as the test medium, and the thickness of the central portion is measured in advance.

Next, a method for producing the nonwoven fabric of the present invention will be described.

The undrawn polyphenylene sulfide short fiber can be obtained by melt-spinning a polyphenylene sulfide polymer using an extruder-type spinning machine and the like and by treating it mostly without performing drawing. In addition, the drawn polyphenylene sulfide short fiber can be obtained by melt-spinning a polyphenylene sulfide polymer using an extruder-type spinning machine and the like in the same manner as in the undrawn polyphenylene sulfide short fiber and by drawing it usually by 3.0 times or more, preferably by 5.5 times or less, and more preferably in a range of 3.5 to 5.0 times. This drawing may be one stage drawing but may be multistage drawing composed of two or more stages. In the case of using two-stage drawing, it is preferable that the first stage drawing is performed by 70% or more and preferably by 75% to 85% of the total magnification and the rest drawing is preferably performed by the second and subsequent stage drawing. The undrawn yarn and drawn yarn obtained may be cut without being crimped or may be crimped and cut. With regard to the presence or absence of crimp in the polyphenylene sulfide short fibers, there is an advantage in each of crimped one and not crimped one. Polyphenylene sulfide short fibers which are crimped are suitable for obtaining a wet nonwoven fabric exhibiting excellent strength since entanglement of the fibers is improved. On the other hand, polyphenylene sulfide short fibers which are not crimped are suitable for obtaining a uniform wet nonwoven fabric with little unevenness.

Next, a normal meta-aramid fiber will be described. A normal meta-aramid fiber can be obtained by extruding a spinning solution in which meta-aramid is dissolved into a high-temperature air gap through a nozzle, followed by performing washing with water, drying, and cutting so as to have a predetermined fiber length.

In addition, the fibrillated meta-aramid fiber can be obtained by extruding a spinning solution in which meta-aramid is dissolved into a poor solvent through a nozzle while stirring it at a high speed. At this time, a collision plate may be provided in the vicinity of the ejecting port. Alternatively, a normal meta-aramid fiber may be fibrillated by applying a mechanical or chemical action thereto.

Examples of the means for fibrillating the meta-aramid fiber include a Niagara beater, a homogenizer, a disc refiner, a mortar machine, a muller and a mortar, and a water jet punch. Incidentally, these means may be applied not only to normal meta-aramid fibers but also to fibrillated meta-aramid fibers, or a plurality of means may be combined depending on the degree of fibrillation.

The degree of fibrillation is confirmed by the freeness using the Canadian standard freeness tester in conformity with JIS P8121-2 (2012). The freeness is 10 to 900 $cm^3$, preferably 10 to 600 $cm^3$, and more preferably 10 to 300 $cm^3$. In a case in which the degree of fibrillation is low, that is, the freeness is too high, the entanglement by fibrils is diminished and the paper strength of the dry web decreases. On the other hand, in a case in which the degree of fibrillation is high, that is, the freeness is too low, the efficiency of the fibrillation step decreases and the load of the dewatering step at the time of papermaking increases.

An example of a method for mixing a meta-aramid fiber and a polyphenylene sulfide short fiber as described above together and forming the mixed fibers into a wet nonwoven fabric will be described.

First, meta-aramid fibers and polyphenylene sulfide short fibers are each dispersed in water. Furthermore, these dispersions are mixed at a predetermined proportion to obtain a papermaking dispersion.

The total amount of meta-aramid fibers and polyphenylene sulfide short fibers with respect to the total weight of the papermaking dispersion is preferably 0.05% to 5% by mass. In a case in which the total amount is smaller than 0.05% by mass, the load of the dewatering step increases as well as the production efficiency decreases. On the other hand, when the total amount exceeds 5% by mass, the dispersion state of the fibers deteriorates and it is difficult to obtain a uniform wet nonwoven fabric.

The dispersion may be prepared by separately preparing a dispersion of meta-aramid fibers and a dispersion of polyphenylene sulfide short fibers in advance and then mixing the two dispersions together or directly preparing a dispersion containing both of meta-aramid fibers and polyphenylene sulfide short fibers. The method in which dispersions of the respective fibers are prepared separately and then mixed together is preferable from the viewpoint that the stirring time can be separately controlled according to the shape and properties of each fiber, and the method in which a dispersion containing both fibers is directly prepared is preferable from the viewpoint of process simplification.

Dispersants and oils composed of cationic, anionic, and nonionic surfactants and the like for improving water dispersibility, a viscosity agent which increases the viscosity of the dispersion and prevents aggregation of the papermaking dispersion, and an antifoaming agent which suppresses the generation of bubbles may be added to the papermaking dispersion.

The papermaking dispersion prepared as described above is subjected to papermaking using a paper machine such as a cylinder net paper machine, a long net paper machine, or a tilted net paper machine or a handmade paper machine, and is dried using a Yankee dryer, a rotary dryer or the like to obtain a dry web. Thereafter, the web is subjected to a heating and pressurization treatment to obtain a wet nonwoven fabric. Incidentally, in the present invention, to simultaneously perform heating and pressurization is referred to as a heating and pressurization treatment, and this is distinguished from a treatment in which only heating such as drying is performed but pressurization is not performed. The dry web refers to a nonwoven fabric which has been subjected to wet papermaking but has not been subjected to the heating and pressurization treatment.

In the present invention, it is preferable to fuse a part of polyphenylene sulfide short fibers (preferably undrawn polyphenylene sulfide short fibers) by the heating and pressurization treatment in order to increase the dielectric breakdown strength. In this case, it is preferable to suppress crystallization during the production process of the dry web as much as possible. For this purpose, the drying temperature in the paper making step is set to preferably 80°C to 140°C and more preferably 90°C to 130°C. Moreover, it is preferable to suppress crystallization by shortening the passage time in the drying step. When the drying is insufficiently performed, the paper strength of the dry web decreases or a sudden heat shrinkage occurs at the time of heating and pressurization treatment in the next step and paper breakage is likely to occur. On the contrary, when the drying is excessively performed, crystallization of the dry web proceeds, and the polyphenylene sulfide short fibers are hardly plastically deformed by the subsequent heating and pressurization treatment; as a result, the gaps between the fibers of the dry web are less likely to be filled, and the dielectric breakdown strength decreases. Here, the drying temperature in the papermaking step refers to the highest treatment temperature (atmospheric temperature) at the time of drying in the papermaking step. In order to make the polyphenylene sulfide short fibers contained in the dry web to be easily plastically deformed by the heating and pressurization treatment, the quantity of heat for crystallization of the dry web before being subjected to the heating and pressurization treatment is preferably 3 J/g or more and more preferably 5 J/g or more.

Incidentally, the crystallization temperature refers to the top temperature of the main exothermic peak measured under the same conditions as those for the measurement of quantity of heat for crystallization of item (1) in the [measurement and evaluation methods] in the column of Examples to be described later.

In the production of the nonwoven fabric of the present invention, it is important to include a step of subjecting a dry web obtained by mixing a meta-aramid fiber and a polyphenylene sulfide short fiber to a heating and pressurization treatment. By performing a heating and pressurization treatment, the polyphenylene sulfide short fibers can be melted and softened, the gaps can be crushed, the fibers can be fused, and a dielectric breakdown strength of 17 kV/mm or more is achieved as described above. The means for heating and pressurization may be any means but, for example, a hot press using a flat plate and the like and a calender can be employed. Among these, a calender which can continuously process the dry web is preferable. As the roll of the calender, a metal-metal roll, a metal-paper roll, a metal-rubber roll and the like can be used.

The temperature condition for the heating and pressurization treatment is preferably a temperature equal to or higher than the glass transition temperature of polyphenylene sulfide short fibers (preferably undrawn polyphenylene sulfide short fibers) and equal to or lower than the melting point of meta-aramid. The temperature is still more preferably 160°C to 260°C and still more preferably 180°C to 240°C in the case of fusing undrawn polyphenylene sulfide short fibers, and the temperature is still more preferably 230°C to 285°C and still more preferably 240°C to 280°C in the case of fusing drawn polyphenylene sulfide short fibers. The polyphenylene sulfide short fibers are not thermally fused and a dense wet nonwoven fabric cannot be obtained when the treatment temperature is lower than the glass transition temperature of the polyphenylene sulfide short fibers. On the other hand, when the treatment temperature exceeds the melting point of meta-aramid, the dry web is too soft and sticks to the heating and pressurizing apparatus such as the roll of a calender or the plate of a hot press, and stable mass production cannot be performed. Moreover, the wet nonwoven fabric also ends up with a rough surface.

Incidentally, the glass transition temperature and the melting point are values measured under the same conditions as those for the glass transition point and melting point of item (2) in the [measurement and evaluation methods] in the column of Examples to be described later.

The pressure is preferably 98 to 7000 N/cm in a case in which calendering is employed as the heating and pressurization treatment. The gap between fibers can be crushed by setting the pressure to 98 N/cm or more. On the other hand, it is possible to prevent breakage of the wet nonwoven fabric in the heating and pressurization treatment step and to stably perform the treatment by setting the pressure to 7000 N/cm or less. The speed of the step is preferably 1 to 30 m/min and more preferably 2 to 20 m/min. Favorable working efficiency can be obtained by setting the speed of the step to 1 m/min or more. On the other hand, by setting the speed of the step to 30 m/min or less, heat can also be conducted to the fibers inside the wet nonwoven fabric and a practical effect by heat fusion of the fibers can be attained.

The wet nonwoven fabric obtained in this manner can be used as insulating paper, punched out, bent into a predetermined shape, inserted into a motor, and used as a wedge, a slot liner, or interphase paper. Moreover, the wet nonwoven fabric can also be used as insulating paper between coil wires and interlayer insulating paper in potential transformers. Furthermore, the wet nonwoven fabric can be used as insulating tape to be used for fixing coils and lead wires by being coated with an epoxy-based or polyester-based pressure-sensitive adhesive.

Moreover, the dry web before being subjected to a heating and pressurization treatment and a thermoplastic resin sheet are laminated and then a heating and pressurization treatment is performed, whereby the dry web and the thermoplastic resin sheet can be pasted to each other. The pasted sheet (laminated sheet) obtained in this manner can be used as an insulating sheet, punched out, bent into a predetermined shape, inserted into a motor, and used as a wedge, a slot liner, or interphase paper. Here, it is preferable that the quantity of heat for crystallization of at least either of the dry web before being subjected to a heating and pressurization treatment or the thermoplastic resin sheet before being subjected to a heating and pressurization treatment is 10 J/g or more in order to attain favorable adhesive property between the dry web and the thermoplastic resin sheet. Incidentally, in the case of a laminated sheet, the dry web and the thermoplastic resin sheet are pasted to each other and hardly separated from each other, and thus the proportion of the fused polyphenylene sulfide short fibers is calculated from the photograph of a cross section of the dry web in a case in which only the dry web is subjected to a heating and pressurization treatment under the same conditions as the conditions under which the dry web and the thermoplastic resin sheet are subjected to a heating and pressurization treatment.

Preferred examples of the thermoplastic resin constituting the thermoplastic resin sheet include polyethylene terephthalate, polyethylene naphthalate, and polyphenylene sulfide, and one or more of these can be used.

EXAMPLES

Next, the present invention will be specifically described based on Examples. However, the present invention is not limited to only these Examples. Various changes and modifications can be made without departing from the technical scope of the present invention. Incidentally, the methods for measuring various properties used in the present Examples are as follows.

[Measurement and evaluation methods]

(1) Quantity of heat for crystallization

About 2 mg of dry web sample after being dried (before be subjected to heating and pressurization treatment) was precisely weighed, the temperature was raised at a rate of temperature rise of 10°C/min under nitrogen using a differential scanning calorimeter (DSC-60 manufactured by Shimadzu Corporation), and the calorific value of the main exothermic peak observed was measured to determine the quantity of heat for crystallization.

(2) Glass transition point and melting point

The glass transition point and melting point are values measured by methods conforming to JIS K7121 (2012) 4.2 (2). The extrapolated glass transition start temperature when heating was performed at 10°C/min under a nitrogen stream is taken as the glass transition point, and the value of the melting peak temperature is taken as the melting point. Incidentally, the glass transition temperature and the melting point are both measured values of the first run measured under the above conditions.

(3) Mass per unit area

In conformity with JIS P8124 (2011), three 20 cm x 20 cm test pieces were collected per 1 m width of the sample, the mass (g) of each piece in the standard state was weighed, and the average value thereof was expressed as the mass per 1 m$^2$ (g/m$^2$).

(4) Thickness

In conformity with JIS P8118 (2014), the thickness was measured at 10 different locations of the sample using a thickness measuring machine after waiting for 10 seconds under a pressure of 100 kPa applied by a 16 mm diameter pressurizer to calm the thickness, and the average value thereof was calculated.

(5) Dielectric breakdown strength

The dielectric breakdown strength was measured in conformity with JIS C2151 (2006) 17.1. From five different locations of the sample, 12 cm x 12 cm test pieces were collected and sandwiched between a disk-shaped upper electrode having a diameter of 25 mm and a mass of 250 g and a disk-shaped lower electrode having a diameter of 75 mm. The voltage was measured when an alternating-current voltage having a frequency of 60 Hz was applied while increasing the voltage at 1.0 kV/sec using air as the test medium and dielectric breakdown was thus caused. The dielectric breakdown voltage attained was divided by the thickness of the central portion measured in advance, and thus the dielectric breakdown strength was calculated.

(6) Rate of hygroscopic dimensional change

From three different locations of the sample, 25 cm vertical × 5 cm horizontal test pieces were collected, dried in a desiccator containing silica gel at 30°C for 24 hours, and marked at an interval of 200.0 mm in the vertical direction.
Subsequently, the test piece was left to stand for 24 hours in a constant temperature and humidity chamber adjusted to have a relative humidity of 90% and a temperature of 30°C and then taken out from the constant temperature and humidity chamber, immediately the intervals L between the marks were measured, and the rates of dimensional change were calculated by the following equation. The average value thereof was calculated and rounded to one decimal place.

```
Rate of dimensional change (%) = (L - 200.0/200.0) × 100
```

Where L denotes the interval (mm) of marks after being left to stand for 24 hours at a relative humidity of 90% and a temperature of 30°C.

(7) Rate of thermal dimensional change (dry heat shrinkage rate)

From three different locations of the sample, 200.0 mm × 200.0 mm test pieces were collected, subjected to a heat treatment for 30 minutes in a hot air dryer at 200°C, and left to stand for 2 hours in an environment at a relative humidity of 60% and a temperature of 25°C, and then the areas of the test pieces were measured. The rates of thermal dimensional change were calculated by the following equation, and the average value thereof was calculated and rounded to one decimal place.

Rate of thermal dimensional change (%) = {(40000 - A)/40000} × 100 Where A denotes the area (mm$^2$) of the test piece after being subjected to a heat treatment.

(8) Tear strength

The tear strength **was** measured in conformity with JIS P8116 (2000). The sample obtained **was** a handmade sample and the fiber orientation **was** low, and thus only the tear strength in the vertical direction **was** measured. (

(9) Wear resistance

The wear resistance **was** measured in conformity with JIS P8136 (1994).
Next, terms in the following Examples and Comparative Examples will be described.

<<Undrawn polyphenylene sulfide short fiber>>

As an undrawn polyphenylene sulfide short fiber, "TORCON" (registered trademark) (manufactured by TORAY INDUSTRIES, INC.) having a single fiber fineness of 3.0 dtex (diameter: 17 μm) and a cut length of 6 mm, product number S111 was used. This polyphenylene sulfide fiber has a glass transition point of 92°C and a melting point of 277°C.

<<Drawn polyphenylene sulfide short fiber>>

As a drawn polyphenylene sulfide short fiber, "TORCON" (registered trademark), product number S301 (manufactured by TORAY INDUSTRIES, INC.) having a single fiber fineness of 1.0 dtex (diameter: 10 μm) and a cut length of 6 mm was used. This polyphenylene sulfide fiber has a glass transition point of 92°C and a melting point of 284°C.

<<Normal meta-aramid fiber>>

A meta-aramid fiber (manufactured by Toray Chemical Korea Inc.) having a single fiber fineness of 1.7 dtex (diameter: 13 μm) and a cut length of 6 mm was used. This meta-aramid fiber has a melting point of 427°C. Incidentally, a normal meta-aramid fiber as used herein refers to a short fiber which has not been fibrillated and is distinguished from the fibrillated meta-aramid to be described below.

<<Fibrillated meta-aramid fiber>>

A pulp-shaped meta-aramid fiber (manufactured by Toray Chemical Korea Inc.) was used. The melting point thereof is 423°C.

<<Beater>>

A Niagara beater (manufactured by KUMAGAI RIKI KOGYO Co., Ltd.) was used as a beating apparatus for further fibrillating the pulp-shaped meta-aramid fiber (manufactured by Toray Chemical Korea Inc.) described in the <<fibrillated meta-aramid fiber>>. The freeness was set to 293 cm$^3$ by beating the fibrillated meta-aramid fiber.

<<Handmade paper machine>>

A handmade paper machine (manufactured by KUMAGAI RIKI KOGYO Co., Ltd.) having a size of 30 cm x 30 cm and a height of 40 cm and a 140-mesh handmade paper net installed on the bottom was used.

<<Rotary dryer>>

A rotary drier (ROTARYDRYER DR-200 manufactured by KUMAGAI RIKI KOGYO Co., Ltd.) was used for drying after handmade papermaking.

<<Heating and pressurization>>

Heating and pressurization was performed using a hydraulic three-roll calendering machine composed of an iron roll and a paper roll (manufactured by YURI ROLL Co., Ltd., model: IH type H3RCM).

[Example 1]

In water, 30 parts by mass of undrawn polyphenylene sulfide short fibers was dispersed to prepare a dispersion having a fiber concentration of 0.10% by mass. Next, 35 parts by mass of normal meta-aramid fibers was dispersed in water to prepare a dispersion having a fiber concentration of 0.15% by mass. Furthermore, a fibrillated meta-aramid fiber was mixed with water so as to have a concentration of 0.30% by mass and beaten for 20 minutes using a Niagara beater to fabricate a mixed solution. These were mixed together, water was further added to the mixture to obtain a dispersion containing 30 parts by mass of undrawn polyphenylene sulfide short fibers, 35 parts by mass of normal meta-aramid fibers, and 35 parts by mass of fibrillated meta-aramid fibers at 0.07% by mass. Wet paper was fabricated using this dispersion and a handmade paper machine. The web obtained by dewatering the wet paper using a roller was dried at 110°C for 70 seconds using a rotary dryer to obtain a dry web. Subsequently, one surface thereof was subjected to a heating and pressurization treatment at an iron roll surface temperature of 200°C, a linear pressure of 490 N/cm, and a roll rotating speed of 3 m/min, and then the other surface was heated and pressurized at an iron roll surface temperature of 230°C, a linear pressure of 490 N/cm, and a roll rotating speed of 3 m/min to obtain a nonwoven fabric.

Incidentally, a sample having a size of 5 cm square was taken from the web obtained by dewatering wet paper by rollers and divided into each fiber, where the wet paper was obtained using a handmade paper machine; each fiber was dried in an oven at 100°C, and then weight thereof was compared with one another. As a result, the proportion of undrawn polyphenylene sulfide short fibers : normal meta-aramid fibers : fibrillated meta-aramid fibers was 30 : 34 : 36 to be approximately equal to the weight ratio of the raw materials.

Moreover, when the cross section of the sample after being heated and pressurized was observed, the undrawn polyphenylene sulfide short fibers were completely formed into a film and fused. The cross section of the sample after being heated and pressurized was imaged at a magnification of 150 times using a scanning electron microscope, and the area proportion of fused polyphenylene sulfide short fibers : normal meta-aramid fibers : fibrillated aramid fibers was calculated using image processing software imageJ. The boundary line of each fiber was determined by manual operation using the Polygon Sections mode. This was performed for three cross sections, and the average of the area proportions attained was calculated. The area proportion of fused polyphenylene sulfide short fibers : normal meta-aramid fibers : fibrillated meta-aramid fibers calculated from the photographs of cross sections of the sample after being heated and pressurized was 36 : 34 : 30, and the mass per unit area of the nonwoven fabric obtained was 40 g/m$^2$. The nonwoven fabric obtained exhibited excellent tear strength and wear durability as well as excellent dielectric breakdown strength.

[Example 2]

A nonwoven fabric was fabricated according to the same procedure except that the normal meta-aramid fiber was changed to a drawn polyphenylene sulfide short fiber and the proportion of undrawn polyphenylene sulfide short fibers : drawn polyphenylene sulfide short fibers : fibrillated meta-aramid fibers was set to 30 : 35 : 35 in Example 1. Incidentally, when the cross section of the sample after being heated and pressurized was observed, the undrawn polyphenylene sulfide short fibers were completely formed into a film and fused but the drawn polyphenylene sulfide short fibers were not deformed or formed into a film. The mass per unit area of the nonwoven fabric obtained was 40 g/m$^2$. The nonwoven fabric obtained exhibited excellent tear strength and wear durability as well as excellent dielectric breakdown strength.

[Example 3]

A nonwoven fabric was fabricated according to the same procedure except that the proportion of undrawn polyphenylene sulfide short fibers : normal meta-aramid fibers : fibrillated meta-aramid fibers was set to 30 : 20 : 50 in Example 1. The mass per unit area of the nonwoven fabric obtained was 41 g/m$^2$. The nonwoven fabric obtained exhibited excellent tear strength and wear durability as well as excellent dielectric breakdown strength.

[Example 4]

A nonwoven fabric was fabricated according to the same procedure except that the proportion of undrawn polyphenylene sulfide short fibers : drawn polyphenylene sulfide short fibers : fibrillated meta-aramid fibers was set to 30 : 20 : 50 in Example 2. The mass per unit area of the nonwoven fabric obtained was 39 g/m$^2$. The nonwoven fabric obtained exhibited excellent tear strength and wear durability as well as excellent dielectric breakdown strength.

[Example 5]

A nonwoven fabric was fabricated according to the same procedure except that the proportion of drawn polyphenylene sulfide short fibers : normal meta-aramid fibers : fibrillated meta-aramid fibers was set to 30 : 35 : 35 and that the iron roll surface temperatures as the temperatures for heating and pressurization treatment using calenders were changed from 200°C and 230°C to 260°C and 270°C, respectively. When the cross section of the sample after being heated and pressurized was observed, the drawn polyphenylene sulfide short fibers were formed into a film and fused. The mass per unit area of the nonwoven fabric obtained was 41 g/m$^2$. The nonwoven fabric obtained exhibited excellent tear strength and wear durability as well as excellent dielectric breakdown strength.

[Reference Example 6]

A nonwoven fabric was fabricated according to the same procedure except that the fibrillated meta-aramid fiber was changed to a drawn polyphenylene sulfide short fiber and the proportion of undrawn polyphenylene sulfide short fibers : drawn polyphenylene sulfide short fibers : normal meta-aramid fibers was set to 30 : 60 : 10 in Example 1. The mass per unit area of the nonwoven fabric obtained was 38 g/m$^2$. The nonwoven fabric obtained exhibited excellent tear strength and wear durability as well as excellent dielectric breakdown strength.

[Reference Example 7]

A nonwoven fabric was fabricated according to the same procedure except that the proportion of undrawn polyphenylene sulfide short fibers : drawn polyphenylene sulfide short fibers : fibrillated meta-aramid fibers was set to 30 : 60 : 10 in Example 2. The mass per unit area of the nonwoven fabric obtained was 42 g/m². The nonwoven fabric obtained exhibited excellent tear strength and wear durability as well as excellent dielectric breakdown strength.

[Example 8]

<<Fabrication of polyphenylene sulfide film>>

Into an autoclave equipped with a stirrer, 33 kg (250 mol, containing crystal water at 40% by mass) of sodium sulfide, 100 g of sodium hydroxide, 36 kg (250 mol) of sodium benzoate, and 79kg of N-methyl-2-pyrrolidone (hereinafter abbreviated as NMP) were charged, the temperature was gradually raised to 205°C while performing stirring, and the mixture was dewatered, then 38 kg (255 mol) of 1,4-dichlorobenzene and 20 kg of NMP were added to the residual mixture, and the mixture was heated at 265°C for 4 hours. The reaction product was washed with hot water 8 times to obtain 21 kg of a polyphenylene sulfide resin composition having a melt viscosity of 3200 poise.

The polyphenylene sulfide resin composition obtained was dried at 180°C for 2 hours under reduced pressure, mixed with 0.5% by mass of silica fine powder having an average particle size of 0.1 $\mu$m, and melt-extruded on a gut at a temperature of 310°C, and further the gut was cut into chips. The chips were dried at 180°C for 3 hours under reduced pressure, then put into the hopper of an extruder, melted at 320°C, extruded into a sheet shape through a T-shaped nozzle, and cooled and solidified on a metal drum maintained at a surface temperature of 30°C to obtain an undrawn polyphenylene sulfide film having a thickness of 50 $\mu$m. The quantity of heat for crystallization of the film obtained was 24.2 J/g.

<<Fabrication of dry web>>

Wet paper was fabricated using the same dispersion as in Example 2 and a handmade paper machine. The web obtained by dewatering the wet paper using a roller was dried at 110°C for 70 seconds using a rotary dryer to obtain a dry web. The mass per unit area of the dry web was 39 g/m².

<<Lamination with dry web>>

The polyphenylene sulfide film and the dry web obtained were laminated, subjected to a heating and pressurization treatment with the dry web facing the iron roll under the conditions of an iron roll surface temperature of 200°C, a linear pressure of 490 N/cm, and a roll rotating speed of 3 m/min, and then subjected to a heating and pressurization treatment again with the polyphenylene sulfide film facing the iron roll under the conditions of an iron roll surface temperature of 220°C, a linear pressure of 490 N/cm, and a roll rotating speed of 3 m/min to obtain a laminated sheet. The laminated sheet obtained exhibited excellent dielectric breakdown strength and the polyphenylene sulfide film and the dry web were not peeled off.

[Example 9]

<<Fabrication of polyethylene terephthalate film>>

To 194 parts by mass of dimethyl terephthalate and 124 parts by mass of ethylene glycol, 0.1 part by mass of magnesium acetate tetrahydrate was added, and a transesterification reaction was performed while distilling off methanol at 140°C to 230°C. Subsequently, an ethylene glycol solution of 0.05 part by mass of trimethyl phosphate and 0.05 part by mass of antimony trioxide were added to the reaction mixture, and stirring was performed for 5 minutes, and then the pressure was lowered to 0.1 kPa as well as the reaction system was gradually heated from 230°C to 290°C while stirring the low polymer at 30 rpm. The time to reach the final temperature and final pressure was both 60 minutes. The reaction system was purged with nitrogen when the polymerization reaction was performed for 3 hours and the stirring torque reached the prescribed stirring torque, the pressure was returned to normal pressure to stop the polycondensation reaction, the resultant was ejected into cold water in a strand shape, and immediately cut to obtain polyethylene terephthalate pellets having an intrinsic viscosity of 0.63 dL/g and a melting temperature of 257°C. The pellets were dried at a temperature of 180°C for 3 hours under reduced pressure, then put into the hopper of an extruder, melted at 280°C, extruded into a sheet shape through a T-shaped nozzle, and cooled and solidified on a metal drum maintained at a surface temperature of 30°C to obtain an undrawn polyethylene terephthalate film having a thickness of 50 $\mu$m. The quantity of heat for crystallization of the film obtained was 22.3 J/g.

<<Fabrication of dry web>>

A dry web was fabricated by the same method as in Example 8. The mass per unit area of the dry web was 39 g/m$^2$.

<<Lamination with dry web>>

The polyethylene terephthalate film and the dry web obtained were laminated, subjected to a heating and pressurization treatment with the dry web facing the iron roll under the conditions of an iron roll surface temperature of 180°C, a linear pressure of 490 N/cm, and a roll rotating speed of 3 m/min, and then subjected to a heating and pressurization treatment again with the polyethylene terephthalate film facing the iron roll under the conditions of an iron roll surface temperature of 210°C, a linear pressure of 490 N/cm, and a roll rotating speed of 3 m/min to obtain a laminated sheet. The laminated sheet obtained exhibited excellent dielectric breakdown strength and the polyethylene terephthalate film and the dry web were not peeled off.

[Comparative Example 1]

A nonwoven fabric was fabricated according to the same procedure except that undrawn and drawn polyphenylene sulfide short fibers were not used and the proportion of fibrillated meta-aramid fibers : normal meta-aramid fibers was set to 50 : 50 in Example 1. The mass per unit area of the nonwoven fabric obtained was 45 g/m$^2$. When the cross section of the nonwoven fabric obtained was observed, fine voids were observed between the fibrillated meta-aramid fibers and between the fibrillated meta-aramid fibers and the normal meta-aramid fibers and the dielectric breakdown strength was less than 17 kV/mm.

[Comparative Example 2]

In water, 50 parts by mass of undrawn polyphenylene sulfide short fibers was dispersed to prepare a dispersion having a fiber concentration of 0.10% by mass. Subsequently, 50 parts by mass of para-aramid fibers having fibrils, 'Kevlar' pulp, product number 1F303 (manufactured by DuPont) was dispersed in water to prepare a dispersion having a fiber concentration of 0.10% by mass. These dispersions were mixed together to prepare a dispersion having a concentration of 0.05% by mass and a proportion of undrawn polyphenylene sulfide short fibers : para-aramid fibers of 50 : 50. Wet paper was fabricated using this dispersion and a handmade paper machine. The web obtained by dewatering the wet paper using a roller was dried at 110°C for 70 seconds using a rotary dryer to obtain a dry web. Subsequently, one surface thereof was subjected to a heating and pressurization treatment at an iron roll surface temperature of 220°C, a linear pressure of 490 N/cm, and a roll rotating speed of 3 m/min to obtain a nonwoven fabric. The mass per unit area of the nonwoven fabric obtained was 41 g/m$^2$. The nonwoven fabric obtained had a dielectric breakdown strength of less than 17 kV/mm and exhibited poor tear strength and wear durability.

The physical property evaluation results in Examples 1 to 9 and Comparative Examples 1 and 2 are summarized in the following tables. In the following Tables, Examples 6 and 7 are reference Examples.

[Table 1-2]

| Table 1 | | | | | | | | | | | | | | |
|---|---|---|---|---|---|---|---|---|---|---|---|---|---|---|
| | | | | | | | | | | | | | | |
| Level | | | Example 1 | Example 2 | Example 3 | Example 4 | Example 5 | Example 6 | Example 7 | Example 8 | Example 9 | Comparative Example 1 | Comparative Example 2 |
| Raw material | Nonwoven fabric (% by mass) | Undrawn polyphenylene sulfide fiber | 30 | 30 | 30 | 30 | | 30 | 30 | 30 | 30 | | 50 |
| | | Drawn polyphenylene sulfide fiber | | 35 | | 20 | 30 | 60 | 60 | 35 | 35 | | |
| | | Normal meta-aramid fiber | 35 | | 20 | | 35 | 10 | | | | 50 | |
| | | Fibrillated meta-aramid fiber | 35 | 35 | 50 | 50 | 35 | | 10 | 35 | 35 | 50 | |
| | | Para-aramid fiber | | | | | | | | | | | 50 |
| | Sheet | Material | - | - | - | - | - | - | - | 50 micron thick polyphenylene sulfide film | 50 micron thick polyethylene terephthalate film | - | - |
| | | Quantity of heat for crystallization (J/q) | - | - | - | - | - | - | - | 24,2 | 22,3 | - | - |

EP 3 640 398 B1

(continued)

Table 1

| | | Level | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|---|---|
| Dry web | Composition after decomposition (% by mass) | Undrawn polyphenylene sulfide fiber | 30 | 29 | 30 | 32 | | 30 | 31 | 28 | 31 | | 51 |
| | | Drawn polyphenylene sulfide fiber | | 34 | | 19 | 31 | 58 | 59 | 34 | 35 | | |
| | | Normal meta-aramid fiber | 34 | | 18 | | 33 | 12 | | | | 45 | |
| | | Fibrillated meta-aramid fiber | 36 | 37 | 52 | 49 | 36 | | 10 | 38 | 34 | 55 | |
| | | Para-aramid fiber | | | | | | | | | | | 49 |
| | Quantity of heat for crystallization (J/g) | | 4,2 | 4,3 | 4,5 | 4,1 | 0 | 3,9 | 4,1 | 4,1 | 4,1 | - | 6,9 |
| Conditions for calendering | Speed (m/min) | | 3 | 3 | 3 | 3 | 3 | 3 | 3 | 3 | 3 | 3 | 3 |
| | Temperature (°C) | | 200↓230 | 200↓230 | 200↓230 | 200↓230 | 260↓270 | 200↓230 | 200↓230 | 200↓220 | 180↓210 | 200↓230 | 220 |

16

EP 3 640 398 B1

[Table 2-2]

| Table 2 | | | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|---|---|
| Level | | | | | | | | | | | | | |
| Nonwoven fabric or laminated sheet after heating and pressurization | Area ratio in photograph of cross section of nonwoven fabric (%) | Undrawn polyphenylene sulfide fiber | 36 | 35 | 33 | 34 | | 34 | 34 | 28 | 32 | | 61 |
| | | Drawn polyphenylene sulfide fiber | | 34 | | 19 | 35 | 58 | 59 | 33 | 36 | | |
| | | Normal meta-aramid fiber | 34 | | 24 | | 35 | 8 | | | | 53 | |
| | | Fibrillated meta-aramid fiber | 30 | 31 | 43 | 47 | 30 | | 9 | 37 | 32 | 47 | |
| | | Para-aramid fiber | | | | | | | | | | | 39 |
| | | Fused polyphenylene sulfide short fiber | 36 | 35 | 33 | 34 | 35 | 34 | 34 | 28 | 32 | | 61 |
| | Physical properties | Mass per unit area (g/m$^2$) | 40 | 40 | 41 | 39 | 41 | 38 | 42 | - | - | 45 | 41 |
| | | Rate of hygroscopic dimensional change (%) | 0,0 | 0,0 | 0,1 | 0,1 | 0, 0 | 0,0 | 0,0 | 0,1 | 0, 1 | 1, 9 | 0,3 |
| | | Rate of thermal dimensional change (%) | 2,5 | 2, 4 | 2,9 | 2, 8 | 2,4 | 2, 6 | 2,5 | 2,4 | 3,0 | 1,3 | 2,0 |
| | | Dielectric breakdown strength (kV/mm) | 21,2 | 23,2 | 19,1 | 22,8 | 19,2 | 17,1 | 17,3 | 40,2 | 37, 6 | 16,1 | 15,9 |
| | | Tear strength (N) | 1,5 | 1,3 | 1, 6 | 1,4 | 1,3 | 1,3 | 1,3 | 3,8 | 3,0 | 2,1 | 0, 9 |
| | | Wear resistance (times) | 11 | 11 | 9 | 10 | 9 | 8 | 9 | 13 | 12 | 7 | 4 |

EP 3 640 398 B1

17

**Claims**

1. A wet nonwoven fabric comprising a meta-aramid fiber and a polyphenylene sulfide short fiber, wherein a proportion of the polyphenylene sulfide short fiber at least partially fused in the wet nonwoven fabric is 40% or less, a proportion of a meta-aramid fiber fibrillated in the wet nonwoven fabric is 15% or more, wherein a freeness of the meta-aramid fiber fibrillated using the Canadian standard freeness tester in conformity with JIS P8121-2 (2012) is 10 to 900 cm$^3$, and the wet nonwoven fabric has a dielectric breakdown strength of 17 kV/mm or more.

2. A method for producing the wet nonwoven fabric according to claim 1, the method comprising subjecting a dry web obtained by fabricating a wet nonwoven fabric containing a meta-aramid fiber and a polyphenylene sulfide short fiber and then by removing moisture to a heating and pressurization treatment at a temperature equal to or higher than a glass transition point of the polyphenylene sulfide short fiber and equal to or lower than a melting point of the meta-aramid fiber.

3. A laminated sheet comprising the wet nonwoven fabric according to claim 1 laminated on at least one surface of a thermoplastic resin sheet.

4. The laminated sheet according to claim 3, wherein a thermoplastic resin constituting the thermoplastic resin sheet is selected from polyethylene terephthalate, polyethylene naphthalate, and polyphenylene sulfide.

5. An electrical insulating paper comprising the wet nonwoven fabric according to claim 1.

6. An electrical insulating sheet comprising the laminated sheet according to claim 3 or 4.

**Patentansprüche**

1. Nassvliesstoff, umfassend eine Meta-Aramidfaser und eine Polyphenylensulfid-Kurzfaser, wobei ein Anteil der Polyphenylensulfid-Kurzfaser, die zumindest teilweise in dem Nassvliesstoff verschmolzen ist, 40 % oder weniger beträgt, ein Anteil einer Meta-Aramidfaser, die in dem Nassvliesstoff fibrilliert ist, 15 % oder mehr beträgt, wobei ein Mahlgrad der Meta-Aramidfaser, die unter Verwendung des Canadian Standard-Mahlheitstesters in Übereinstimmung mit JIS P8121-2 (2012) fibrilliert ist, 10 bis 900 cm$^3$ beträgt und der Nassvliesstoff eine Durchschlagfestigkeit von 17 kV/mm oder mehr aufweist.

2. Verfahren zum Herstellen des Nassvliesstoffs nach Anspruch 1, wobei das Verfahren das Unterziehen einer trockenen Bahn, die durch Herstellen eines Nassvliesstoffs, der eine Meta-Aramidfaser und eine Polyphenylensulfid-Kurzfaser enthält, und dann durch Entfernen von Feuchtigkeit erhalten wird, einer Erwärmungs- und Druckbeaufschlagungsbehandlung bei einer Temperatur, die gleich oder höher als ein Glasübergangspunkt der Polyphenylensulfid-Kurzfaser und gleich oder niedriger als ein Schmelzpunkt der Meta-Aramidfaser ist, umfasst.

3. Laminierte Folie, umfassend den Nassvliesstoff nach Anspruch 1, der auf mindestens eine Oberfläche einer thermoplastischen Harzfolie laminiert ist.

4. Laminierte Folie nach Anspruch 3, wobei ein thermoplastisches Harz, das die thermoplastische Harzfolie bildet, aus Polyethylenterephthalat, Polyethylennaphthalat und Polyphenylensulfid ausgewählt ist.

5. Elektrisch isolierendes Papier, umfassend den Nassvliesstoff nach Anspruch 1.

6. Elektrisch isolierende Folie, umfassend die laminierte Folie nach Anspruch 3 oder 4.

**Revendications**

1. Tissu non tissé humide comprenant une fibre de méta-aramide et une fibre courte de sulfure de polyphénylène, dans lequel une proportion de la fibre courte de sulfure de polyphénylène au moins partiellement fondue dans le tissu non tissé humide est de 40 % ou moins, une proportion d'une fibre de méta-aramide fibrillée dans le tissu non tissé humide est de 15 % ou plus, dans lequel un indice d'élasticité de la fibre de méta-aramide fibrillée en utilisant le testeur d'élasticité standard canadien conformément à JIS P8121-2 (2012) est de 10 à 900 cm$^3$ , et le tissu non tissé humide a une résistance à la rupture diélectrique de 17 kV/mm ou plus.

2. Procédé de production du tissu non tissé humide selon la revendication 1, le procédé comprenant la soumission d'une bande sèche obtenue en fabriquant un tissu non tissé humide contenant une fibre de méta-aramide et une fibre courte de sulfure de polyphénylène et ensuite en éliminant l'humidité à un traitement de chauffage et de mise sous pression à une température égale ou supérieure à un point de transition vitreuse de la fibre courte de sulfure de polyphénylène et égale ou inférieure à un point de fusion de la fibre de méta-aramide.

3. Feuille stratifiée comprenant le tissu non tissé humide selon la revendication 1 stratifié sur au moins une surface d'une feuille de résine thermoplastique.

4. Feuille stratifiée selon la revendication 3, dans laquelle une résine thermoplastique constituant la feuille de résine thermoplastique est choisie parmi le polyéthylène téréphtalate, le polyéthylène naphtalate et le sulfure de polyphénylène.

5. Papier isolant électrique comprenant le tissu non tissé humide selon la revendication 1.

6. Feuille isolante électrique comprenant la feuille stratifiée selon la revendication 3 ou 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7189169 A
- JP 2047389 A
- JP 2001040597 A
- JP 2009277653 A
- JP H0247389 A
- CN 106087529 A